# EUROPÄISCHE PATENTSCHRIFT

(11) **EP 3 769 002 B1**
(45) Veröffentlichungstag und Bekanntmachung des Hinweises auf die Patenterteilung: **15.11.2023**
(21) Anmeldenummer: 19714356.3
(22) Anmeldetag: 22.03.2019
(51) Int. Cl.: F16L 53/38

(54) **BEHEIZTE MEDIENLEITUNG MIT FIXIERTEIL**
HEATED MEDIA LINE WITH MOUNTING PART
CONDUIT DE FLUIDES CHAUFFÉ COMPRENANT UNE PARTIE DE BLOCAGE

(30) Priorität: 23.03.2018 DE 102018107004; 23.03.2018 DE 102018107005
(43) Veröffentlichungstag der Anmeldung: 27.01.2021
(73) Patentinhaber: Voss Automotive GmbH, 51688 Wipperfürth (DE)
(72) Erfinder: STELLUTO, Michele, 42859 Remscheid (DE); WILMS, Waldemar, 51709 Marienheide (DE); PLIETSCH, Reinhard, 42929 Wermelskirchen (DE); SCHWARZKOPF, Otfried, 51515 Kürten (DE); MITTERER, Reiner, 51688 Wipperfürth (DE)
(74) Vertreter: Dr. Solf & Zapf Patent- und Rechtsanwalts PartG mbB
(86) Internationale Anmeldenummer: PCT/EP2019/057302
(87) Internationale Veröffentlichungsnummer: WO 2019/180234

(56) Entgegenhaltungen:
- EP-A1- 1 125 810
- WO-A1-2010/057819
- DE-A1-102013 000 588
- DE-U1-202012 102 954
- DE-U1-202014 105 908

## Beschreibung

Die Erfindung betrifft eine beheizte Medienleitung gemäß dem Oberbegriff des Anspruchs 1. Solche beheizte Medienleitungen sind beispielsweise aus DE102013000588A1 oder EP112581 0A1 bekannt.

Moderne Verbrennungsmotoren sollen hohe Leistungen bei effizienter Nutzung der Treibstoffe und bei guten Abgaswerten erbringen. Als Lösung für die Vermeidung von Überhitzung, zur Effizienzsteigerung und zur Kühlung der Abgase und hierdurch auch zur Senkung der in den Abgasen enthaltenen Stickoxide wird die bekannte Wassereinspritzung eingesetzt und weitergewickelt. Hierbei wird ein feiner Wassernebel aus destilliertem Wasser entweder in den Ansaugtrakt und/oder direkt in den Brennraum eingespritzt. Die Verdampfungsenergie sorgt dabei für eine effektive Kühlung der Ladeluft oder des Brennraums und einer besseren Füllung im Brennraum. Diese Methode kann sowohl zur Leistungssteigerung als auch zur Einsparung von Brennstoff beitragen. Bei Kraftfahrzeugen, die alltäglich genutzt werden und gegebenenfalls große Strecken zurücklegen, ist es notwendig, eine bestimmte Menge Wasser für die Wassereinspritzung mitzuführen.

Der Erfindung liegt die Aufgabe zugrunde, eine Medienleitung zur Verfügung zu stellen, die eine optimale Funktion der Wassereinspritzung im üblichen Temperaturbereich, d. h. bei Außentemperaturen unter 0 °C oder über 0 °C, sicherstellen kann, und bei der der die Medienleitung umgebende Heizleiter in seiner Lage gesichert ist.

Erfindungsgemäß wird dies durch die Merkmale des Anspruchs 1 gelöst. Die Erfindung basiert dabei auf der Erkenntnis, dass bei Temperaturen von 0 °C und weniger durch die Beheizung der wasserführenden Leitung ein Einfrieren verhindert wird und nah am Motorbereich, in dem schnell die Temperaturen über 0 °C ansteigen und oftmals eine Wassereinspritzung bei kaltem Motor nicht notwendig ist, die wasserführende Leitung nicht beheizt ist, so dass die wasserführende Schlauchleitung bzw. Medienleitung nur über eine Teillänge erfindungsgemäß beheizbar ist. Hierdurch kann einerseits die Medienleitung kostengünstiger hergestellt werden, da nur eine Teilbewicklung mit einem Heizleiter erforderlich ist, und darüber hinaus kann auch elektrische Energie eingespart werden. Durch das erfindungsgemäße Fixierteil wird dabei sichergestellt, dass das auf der Schlauchleitung vorhandene Wicklungsende in axialer Richtung und umfangsgemäß in Bezug auf die Schlauchleitung in seiner Lage fixiert ist. Hierdurch kann auch der motornahe, unbeheizte Bereich der Schlauchleitung exakt eingestellt werden. Erfindungsgemäß werden durch die axiale und rotatorische Festlegung der Heizleiter mittels des Fixierteils Beschädigungen an den Heizleitern vermieden. Zudem kann erfindungsgemäß auf Fluidkupplungssysteme verzichtet werden, denn vorteilhafterweise ist das Fixierteil auf der ununterbrochenen medienführenden Schlauchleitung festgelegt, so dass keine Verbindungsstellen vorhanden sind. Das Fixierteil kann aber auch derart ausgebildet sein, dass innerhalb des Fixierteils zwei getrennte Schlauchleitungen miteinander verbunden werden.

Es ist vorteilhaft, wenn das Fixierteil von einer Kapselung umschlossen ist, so dass durch die Kapselung der innerhalb der Kapselung liegende Endbereich des Heizleiters und die gegebenenfalls erforderlichen elektrischen Verbinder mechanisch geschützt und/oder thermisch abgeschirmt werden können.

Indem vorteilhafterweise die Kapselung am Fixierteil festgelegt sein kann, wird erreicht, dass die Kapselung axial nicht verrutschen oder sich verdrehen kann. Hierdurch wird erreicht, dass die zum Verbinden der innerhalb der Kapselung endenden Heizleiterenden vorgesehenen elektrischen Verbinder, insbesondere Crimp-Verbinder, gegen ständige Bewegung geschützt werden. Es ist besonders vorteilhaft, wenn ein die elektrisch beheizte Schlauchleitung umgebendes Mantelrohr innerhalb der Kapselung endet.

Die Kapselung wird durch ein zweckmäßigerweise aus zwei verrasteten und/oder verschweißten Halbschalen gebildetes Gehäuse gebildet, das aus einem geeigneten Kunststoff hergestellt ist. Alternativ kann die Kapselung auch aus einem beispielsweise bei Wärmeeinwirkung schrumpfenden Schlauch bestehen. Derartige Schrumpfschläuche sind allgemein bekannt. Das Fixierteil kann auch Formschlusselemente zur Festlegung des geschrumpften Schlauches besitzen, insbesondere ist es hierbei vorteilhaft, wenn das Fixierteil derart ausgelegt ist, dass der geschrumpfte Schlauch sich gut anlegen kann bzw. dass verrundete Anlegeabschnitte vorhanden sind. Im Bereich des aus der Kapselung austretenden Mantelrohrs, das insbesondere als Wellrohr ausgebildet ist, kann sich der geschrumpfte Schlauch um die vorhandenen Berge und Täler des Wellrohrs, das vorzugsweise verwendet wird, formschlüssig legen. Weiterhin ist es von Vorteil, wenn ein innerhalb des Schrumpfschlauches vorhandener elektrischer Verbinder durch eine Crimp-Vorrichtung in einem bestimmten Abstand zur Schlauchleitung festgelegt wird, so dass bestimmte Radien der durch den elektrischen Verbinder verbundenen Heizleiter eingehalten werden können.

Vorteilhafterweise kann am Fixierteil ein Umlenkfortsatz ausgebildet sein und ein durchgehender Heizleiter zur Beheizung der Schlauchleitung verwendet werden, wobei gleichzeitig durch die Ausbildung des Umlenkfortsatzes am Fixierteil der Umlenkpunkt des Heizleiters lagefixiert ist.

Vorteilhafte Ausführungen der Erfindung sind in den Unteransprüchen 2 bis 7 enthalten.

Vorteilhafterweise wird die das Wicklungsende umgebende Kapselung in die Funktion des Fixierteils miteinbezogen. Hierdurch wird nicht nur das Wicklungsende in Bezug auf die Schlauchleitung lagefixiert, sondern auch die Kapselung, so dass hierdurch insgesamt eine optimale Heizwirkung und Wärmeverteilung erreicht wird.

Die Erfindung und vorteilhafte Ausgestaltungen derselben werden anhand der in den nachfolgenden Figuren dargestellten Ausführungsbeispiele erläutert. Es zeigen:
- Fig. 1: eine Prinzipansicht einer Medienleitung,
- Fig. 1a: einen Teilschnitt durch eine beheizte Medienleitung,
- Fig. 2: einen Schnitt entlang der Schnittlinie II-II in Fig. 1,
- Fig. 3: eine Ansicht auf eine Halbschale eines Fixierteils,
- Fig. 4: einen Schnitt entlang der Schnittlinie IV-IV,
- Fig. 5: einen Schnitt entlang der Schnittlinie V-V in Fig. 3,
- Fig. 6: eine Ansicht einer beheizten Medienleitung zum Teil geschnitten in alternativer Ausführungsform,
- Fig. 7: eine Ansicht einer beheizten Medienleitung zum Teil geschnitten in einer weiteren Ausführungsform,
- Fig. 8: eine Ansicht einer beheizten Medienleitung zum Teil geschnitten in einer weiteren alternativen Ausführungsform,
- Fig. 9: einen Schnitt entlang der Schnittlinie IX-IX in Fig. 8,
- Fig. 10: eine Seitenansicht auf ein erfindungsgemäßes Fixierteil in alternativer Ausführung,
- Fig. 11: eine um 180° gedrehte Ansicht auf das Fixierteil gemäß Fig. 10,
- Fig. 12: eine Ansicht gemäß dem Pfeil XII in Fig. 10 und
- Fig. 13: eine Ansicht auf eine erfindungsgemäßes Medienleitung gemäß Fig. 1a gemäß Pfeil XIII, jedoch mit dem Fixierteil gemäß Fig. 10.

In den verschiedenen Figuren der Zeichnung sind gleiche Teile stets mit denselben Bezugszeichen versehen.

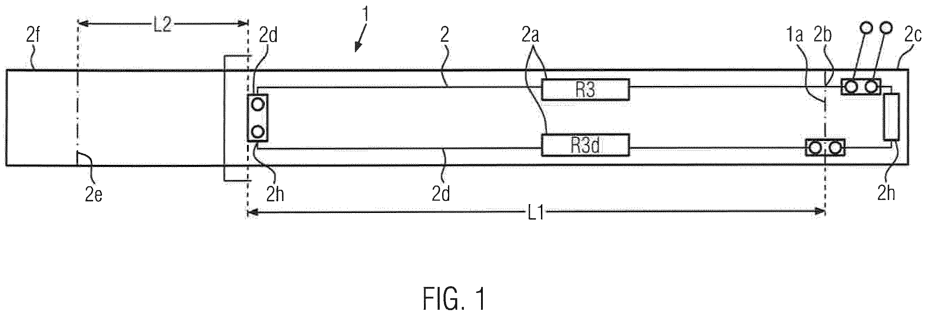

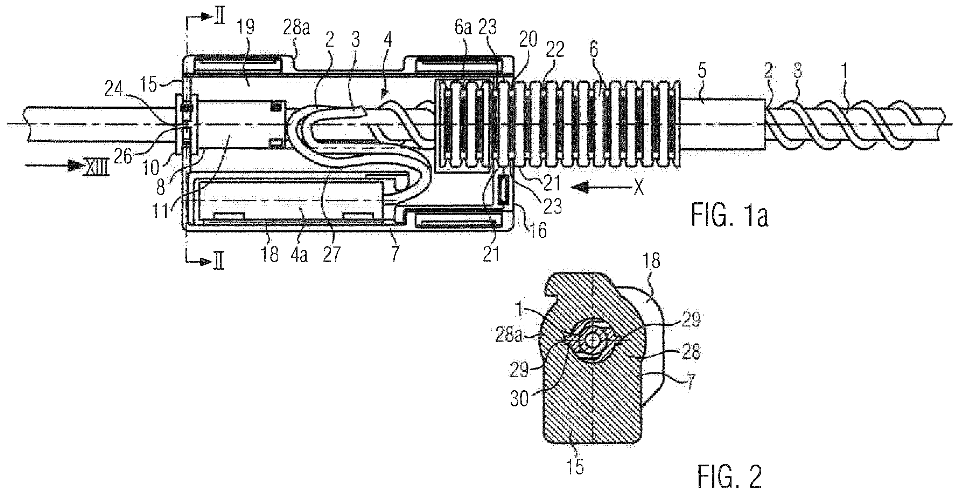

In Figur 1 ist eine erste Ausführungsform einer beheizten Medienleitung gezeigt. Diese Medienleitung umfasst eine Rohr- oder Schlauchleitung 1, die vorzugsweise aus Kunststoff hergestellt und flexibel ausgebildet ist. Diese Rohr- oder Schlauchleitung 1 weist einen inneren, nicht dargestellten Strömungskanal auf, in dem ein Fluid, beispielsweise Wasser, transportiert werden kann. Am Umfang dieser Rohr- oder Schlauchleitung 1 ist eine Heizeinrichtung 2a in Längsrichtung verlaufend angeordnet. Diese Heizeinrichtung 2a besteht aus mindestens einem elektrischen Heizleiter 2, der einen elektrischen Widerstand R3 aufweist. Dieser elektrische Heizleiter 2 ist vorzugsweise spiralförmig um die Rohr- oder Schlauchleitung 1 umfangsgemäß gewickelt. Dieser Heizleiter 2 ist ausgehend von einem ersten Anschlussende 1a der Rohr- oder Schlauchleitung 1 zum Beispiel zum Anschließen eines Aggregates oder einer anderen Medienleitung mittels eines Anschlussverbinders 2c nur über eine Teillänge L1 der Rohr- oder Schlauchleitung 1 aufgebracht, zum Beispiel spiralförmig gewickelt, so dass ein nicht mit dem Heizleiter 2 versehener Abschnitt der Länge L2 der Rohr- oder Schlauchleitung 1 im Bereich vor einem Wicklungsende 2d des Heizleiters 2 mit einem zweiten Anschlussabschnitt 2e für einen Anschlussverbinder 2f ausgebildet ist. Im dargestellten Ausführungsbeispiel der Figur 1 ist ein zweiter elektrischer Heizleiter 2a ausgehend vom Wicklungsende 2d des Heizleiters 2 über die gleiche Teillänge L1 bis zum Anschlussende 2b vorzugsweise parallel zum Heizleiter 2 spiralförmig verlaufend zurückgewickelt. Dieser Heizleiter 2a besitzt den Widerstand R3a. Im Bereich ihres Anschlussendes 2b sind die beiden Heizleiter 2, 2a an ihren Enden mittels eines elektrischen Verbinders 2h, zum Beispiel eines Crimp-Verbinders, miteinander verbunden. Erfindungsgemäß ist das Wicklungsende 2d der Heizleiter 2, 2a in Strömungsrichtung des in der Rohr- oder Schlauchleitung 1 fließenden Fluids hinter dem Anschlussende 2b und vor dem zweiten Anschlussende 2e der Schlauchleitung 1 zum Anschluss eines Anschlussverbinders 2f zum Verbinden mit einem Aggregat oder dergleichen oder einer anderen Rohr- oder Schlauchleitung angeordnet.

Wie in Figur 1a dargestellt, ist die Schlauchleitung 1 vorzugsweise von einem Fixierelement 5, zum Beispiel einem Band oder einer Schrumpffolie umschlossen, das insbesondere zum Fixieren der Heizleiter 2, 3 dient. Die Rohr- oder Schlauchleitung 1 verläuft innerhalb eines Mantelrohrs 6, das insbesondere als Wellrohr ausgebildet ist. Dieses Mantelrohr 6 stellt einen äußeren mechanischen und/oder thermischen Schutz dar und endet vor dem Wicklungsende 4. Das Mantelrohr 6 ist beispielsweise aus Kunststoff gefertigt. Das Wicklungsende 4 sowie das Mantelrohr 6 mit seinem Endabschnitt 6a und der elektrische Verbinder 4a sind in einer Kapselung 7 enthalten bzw. von dieser Kapselung 7 umschlossen. Diese Kapselung 7 kann beispielsweise aus Kunststoff bestehen und dient ebenfalls zum thermischen und/oder mechanischen Schutz. Weiterhin ist ein Fixierteil 8 vorhanden, das unmittelbar auf der Schlauchleitung 1 in Längsrichtung X gesehen, das heißt in Blickrichtung gesehen vom Endabschnitt 6a des Mantelrohrs 6, hinter dem Wicklungsende 4, entsprechend dem Wicklungsende 2d in Fig. 1, derart befestigt ist, dass es in axialer Richtung der Schlauchleitung 1 gegen Verschiebung und in Umfangsrichtung gegen Verdrehung und damit gegen eine Lageveränderung in Bezug auf die Schlauchleitung 1 gesichert ist. Vorteilhafterweise ist das Fixierteil 8 stoffschlüssig, insbesondere durch eine Laserverschweißung, auf der Schlauchleitung 1 fixiert. Hierzu besteht das Fixierteil 8 zumindest teilweise zweckmäßigerweise aus einem lasertransparenten Kunststoffmaterial. Die Rohr- oder Schlauchleitung 1 besteht zweckmäßigerweise aus einem Kunststoffmaterial. Dabei ist die Schlauch- oder Rohrleitung 1 vorteilhafterweise flexibel ausgeführt.

Das Fixierteil 8 ist zweckmäßigerweise als ein rohrförmiges Formteil insbesondere aus Kunststoff hergestellt. Es besteht aus insbesondere zwei Halbschalen 9, die über eine Rastverbindung miteinander verbindbar sind. Im verbundenen Zustand der Halbschalen 9 umschließt das Fixierteil 8 die Schlauchleitung 1. Das Fixierteil 8 besteht zweckmäßigerweise aus einem Ringbund 10 und mindestens einem an diesem angeformten Führungsstutzen 11, wobei die Schlauchleitung 1 vorteilhafterweise mittig durch den Ringbund 10 und den Führungsstutzen 11 verläuft. Der Führungsstutzen 11 erstreckt sich insbesondere vom Ringbund 10 entgegen der Längsrichtung X in Richtung auf das Wicklungsende 4. Zweckmäßigerweise befindet sich die Laserverschweißung im Bereich des Führungsstutzens 11. Der Ringbund 10 weist an seinem Umfang eine umlaufende Ausnehmung 12 auf.

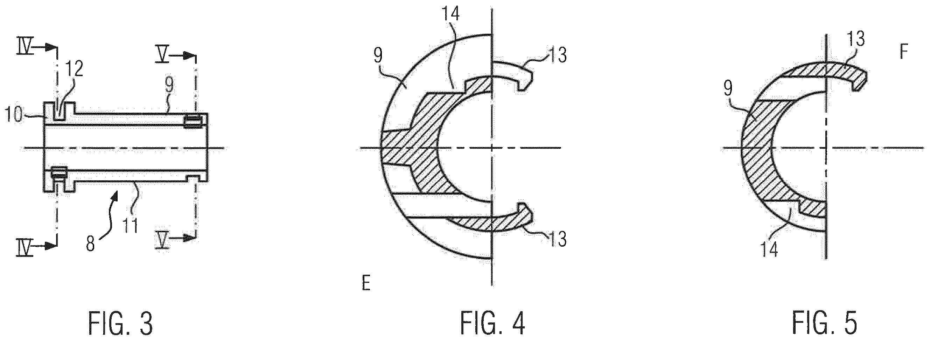

Wie in den Figuren 3 bis 5 dargestellt ist, sind die beiden Halbschalen 9 gleich ausgebildet, und jede der beiden Halbschalen 9 weist zwei axial beabstandete und um 180° zueinander versetzte Rasthaken 13 auf, die in korrespondierende Rastausnehmungen 14 der jeweils anderen Halbschale 9 im zusammengesetzten Zustand der beiden Halbschalen 9 einrasten.

Die Kapselung 7 wird insbesondere aus zwei axial beabstandeten Stirnwänden 15, 16 gebildet, die endseitig jeweils einen durch eine Umfangswandung 18 geschlossenen Kapselraum 19 begrenzen. In der Stirnwand 16 ist eine Öffnung 20 ausgebildet, durch die das Mantelrohr 6 verläuft, und mit ihrem Öffnungsrand 21 ist sie formschlüssig innerhalb von Wellentälern 22 des zum Beispiel als Wellrohr ausgebildeten Mantelrohres 6 axial und umfangsgemäß geführt. Zweckmäßigerweise weist der Öffnungsrand 21 hierzu zwei radial nach innen weisende, parallel verlaufende, axial beabstandete Umfangsrippen 23 auf, die jeweils in ein Wellental 22 eingreifen.

Die andere Stirnwand 15 weist eine Öffnung 24 auf, die mit ihrem Öffnungsrand 26 in die umlaufende Ausnehmung 12 des Ringbundes 10 eingreift und hier formschlüssig in axialer und umfänglicher Richtung fixiert ist.

Die Kapselung 7 besteht aus zwei Halbschalen 28, 28a, die insbesondere durch eine Rastverbindung miteinander form- und kraftformschlüssig verbunden sind. Im Bereich der umlaufenden Ausnehmung 12 des Ringbundes 10 des Fixierteils 8 sind einander gegenüberliegende radiale Vorsprünge 29 ausgebildet. Diese Vorsprünge 29 ragen in korrespondierende Ausschnitte 30 der innerhalb der umlaufenden Ausnehmungen 12 des Ringbundes 10 verlaufenden Stirnwand 15 hinein, so dass eine umfangsgemäße Fixierung der Kapselung 7 auf dem Fixierteil 8 verwirklicht ist. Innerhalb des Kapselraums 19 der Kapselung 7 ist der elektrische Verbinder 4a innerhalb eines Innengehäuses 27 formschlüssig fixiert. Durch diese Ausbildung der Kapselung 7 und des Fixierteils 8 sowie deren Anordnung zueinander wirken die Kapselung 7 und das Fixierteil 8 derart zusammen, dass das Wicklungsende 4 in axialer Richtung und in radialer Richtung sowie in Umfangsrichtung mittelbar in Bezug auf die Schlauch- bzw. Rohrleitung 1 auf dieser in axialer und umfänglicher Richtung lagefixiert ist.

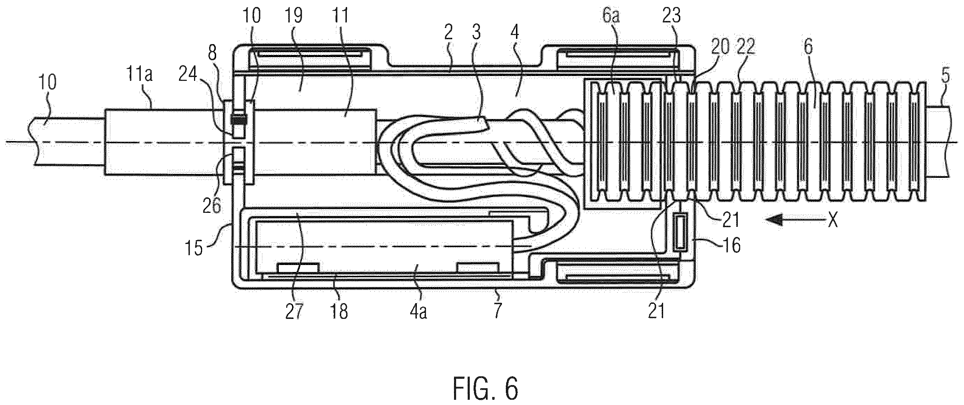

In Figur 6 ist eine Abwandlung gegenüber Fig. 1a dargestellt. Hierbei ist das Fixierteil 8 derart ausgebildet, dass beidseitig des Ringbundes 10 ein Führungsstutzen 11, 11a angeformt ist. Bei dieser Ausführung endet die Schlauchleitung 1 in dem in der Kapselung 7 liegenden Führungsstutzen 11 und ist mit diesem stoffschlüssig, insbesondere durch Laserschweißung verbunden. In dem anderen, außerhalb der Kapselung 7 verlaufenden Führungsstutzen 11a ist eine weitere Rohr- oder Schlauchleitung 1a mit ihrem Ende eingesteckt und mit dem Führungsstutzen 11a stoffschlüssig, insbesondere durch Laserschweißung verbunden. Somit werden über das Fixierteil 8 bei dieser Ausführungsform zwei separate Rohr- bzw. Schlauchleitungen 1, 1a miteinander verbunden, wobei die Schlauchleitung 1a die nicht mit einem Heizleiter versehene Teillänge L2, siehe Fig. 1a, darstellt. Im Gegensatz hierzu ist bei dem Ausführungsbeispiel gemäß Fig. 1a eine durchgehende Schlauchleitung 1 vorhanden. Bei der Ausführungsform gemäß Fig. 6 kann das Fixierteil 8 vorteilhafterweise als einstückiges, integrales Spritzgussteil, zum Beispiel aus Kunststoff, ausgebildet sein. Was die übrigen Konstruktions- und funktionellen Merkmale der Ausführungsform gemäß Fig. 6 betrifft, so kann auf die Ausbildung gemäß Fig. 1a Bezug genommen werden, so dass insoweit die Ausbildung gemäß Fig. 6 mit der Ausbildung gemäß Fig. 1a übereinstimmt. Bei einer stoffschlüssigen Verbindung durch eine Laserschweißung ist es von Vorteil, wenn die beiden Führungsstutzen 11, 11a zumindest teilweise aus einem lasertransparenten Material bestehen.

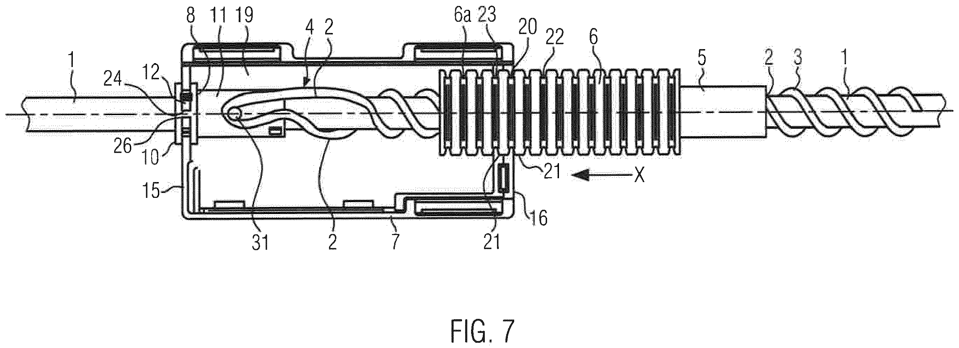

In Fig. 7 ist ebenfalls eine Abwandlung gegenüber Fig. 1a dargestellt. Hierbei ist an dem in der Kapselung 7 verlaufenden Führungsstutzen 11 des Fixierteils 8 ein nach außen abstehender Umlenkfortsatz 31 angeordnet, vorteilhafterweise angeformt. Um diesen Umlenkfortsatz 31 herum ist ein von der Schlauchleitung 1 in die Kapselung 7 eingeführter Heizleiter 2, der die Schlauchleitung 1 zum Beispiel spiralförmig umgibt, hereingeführt, so dass der Heizleiter 2 wieder entlang der Schlauchleitung 1 zu deren Anschlussende zurückgeführt wird und auf dieser insbesondere spiralförmig verläuft. Bei dieser Ausführung entfällt das Innengehäuse 27 zur Aufnahme des elektrischen Verbinders 4a. In Bezug auf die übrigen baulichen und funktionellen Merkmale stimmt die Ausführungsform gemäß Fig. 7 mit der Ausführung gemäß Fig. 1a überein.

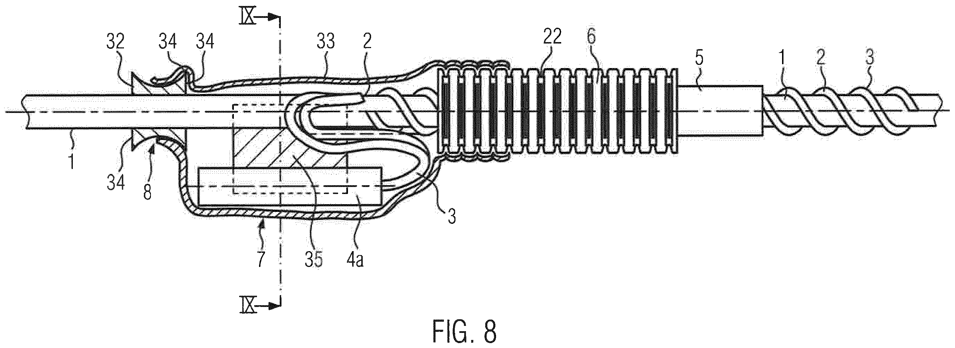

In Fig. 8 ist eine weitere Ausführung dargestellt. Hierbei kann, was den Aufbau der Schlauch- oder Rohrleitung 1, der Heizleiter 2, 3, des Wicklungsendes 4 und des elektrischen Verbinders 4a, des Fixierelementes 5 sowie des Mantelrohrs 6 auf die Ausbildung gemäß Fig. 1a verwiesen werden.

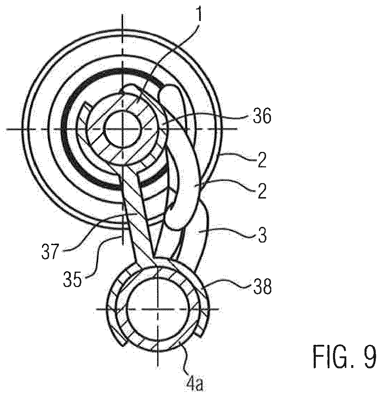

Unterschiedlich ist die Ausbildung des Fixierteils 8 und der Kapselung 7. Das Fixierteil 8 besitzt einen im Längsschnitt gesehen diaboloförmig ausgebildeten Tragkörper 32, so dass dieser eine nach innen konkav gekrümmte, umlaufende Oberfläche aufweist. Dieser Tragkörper 32 ist stoffschlüssig mit der durch diesen verlaufenden Schlauchleitung 1 insbesondere durch Laserschweißung verbunden. Der Tragkörper 32 besteht insbesondere aus zwei Halbschalen, die über eine Rastverbindung formschlüssig miteinander verbunden sind, so dass der Tragkörper 32 auf der Schlauchleitung 1 montiert werden kann. Die Kapselung 7 wird von einem Schrumpfschlauch 33 gebildet, der durch Wärme schrumpfbar ist, und der derart dimensioniert ist, dass er mit einem Ende das Mantelrohr 6 umfasst und mit seinem gegenüberliegenden Ende zumindest teilweise den Tragkörper 32. Im aufgeschrumpften Zustand ist der Schrumpfschlauch 33 mit dem Mantelrohr 6 formschlüssig verbunden, indem er in die Wellentäler 22 des Mantelrohrs 6 eingreift. Auf dem Tragkörper 32 ist der Schrumpfschlauch 33 ebenfalls formschlüssig durch die an den Enden der konkav gekrümmten Oberfläche des Tragkörpers 32 ausgebildeten, spitz verlaufenden Körperenden 34 fixiert. Innerhalb des Schrumpfschlauches 33 liegt das Wicklungsende 4 und der elektrische Verbinder 4a. Zweckmäßigerweise ist der elektrische Verbinder 4a mittels einer Clip-Vorrichtung 35 auf der Schlauch- oder Rohrleitung 1 festgelegt, siehe Fig. 9. Diese Clip-Vorrichtung 35 ist vorzugsweise aus einem ersten, im Querschnitt C-förmigen, die Schlauchleitung 1 mit einem Umschlingungswinkel > 180° umfassenden, radial elastischen Clipteil 36 gebildet, das über einen Verbindungssteg 37 mit einem zweiten, im Querschnitt C-förmigen, den elektrischen Verbinder 4a mit einem Umschlingungswinkel > 180° umfassenden, radial elastischen Clipteil 38 verbunden ist. Durch diese Ausbildung kann die Clip-Vorrichtung 35 sowohl auf die Schlauchleitung 1 als auch auf den elektrischen Verbinder 4a kraftschlüssig aufgeclipst werden, so dass der elektrische Verbinder 4a innerhalb des Schrumpfschlauches 33 positioniert werden kann, und nach dem Schrumpfprozess ist dann der elektrische Verbinder 4a durch die Anpassung des Schrumpfschlauches 33 an die eingeschlossene Kapselung durch den wärmeinitiierten Schrumpfprozess lagefixiert.

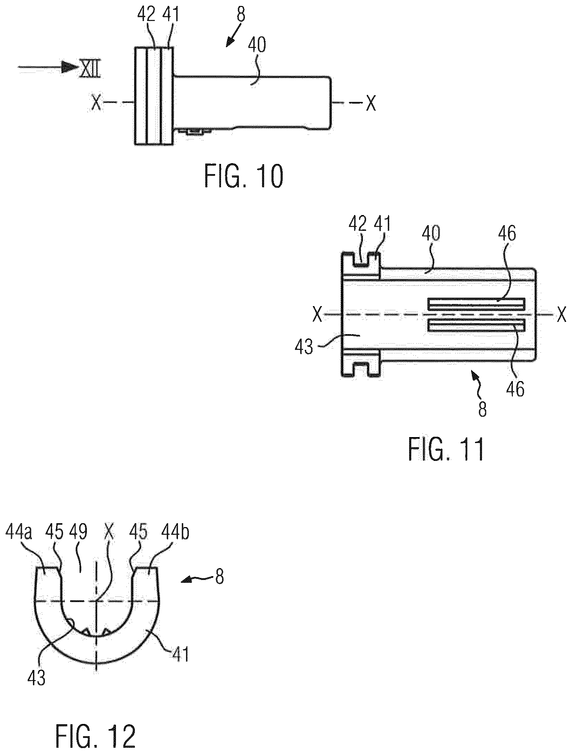

In den Figuren 10 bis 13 ist eine weitere Ausgestaltung eines erfindungsgemäßen Fixierteils 8 dargestellt. Dieses Fixierteil 8 weist einen, im Querschnitt senkrecht zu seiner Längsachse X-X U-förmigen Führungsabschnitt 40 auf, der sich in Längsrichtung einer eingeschobenen Schlauchleitung erstreckt. An einem Ende weist der Führungsabschnitt 40 einen den Führungsabschnitt 40 einschließenden Halteflansch 41 auf. Dieser Halteflansch 41 besitzt in seiner äußeren Umfangsfläche eine Aufnahmenut 42. Der U-förmige Führungsabschnitt 40 ist derart bemessen, dass die eingeschobene Schlauchleitung 1 an seiner Innenfläche über einen Teilumfang, insbesondere über einen Umfangswinkel von 180°, anliegt. Im endgültigen Montagezustand ist das Fixierteil 8 mit der Schlauchleitung 1 im gegenseitigen Anlagebereich zumindest in einem Teilabschnitt stoffschlüssig, insbesondere durch eine Ultraschall-Schweißung verbunden.

Der zum Beispiel ebenfalls im Querschnitt zur Längsachse X-X U-förmige Halteflansch 41 weist in Verlängerung seiner Anlagefläche 43, die den Anlagebereich mit der eingeschobenen Schlauchleitung 1 mit umfasst, beidseitig in Verlängerung einen Endabschnitt 44a, 44b auf. Diese Endabschnitte 44a, 44b verlaufen parallel zueinander, und ihr gegenseitiger Abstand ist im montierten Zustand des Fixierteils 8 auf der Schlauchleitung 1 gleich dem Außendurchmesser der Schlauchleitung 1. An ihren Enden weisen die Endabschnitte 44a, 44b Einführungsschrägen 45 auf, so dass die Schlauchleitung 1 ungehindert zwischen die Endabschnitte 44a, 44b und in den Führungsabschnitt 40 eingeschoben werden kann. Der Führungsabschnitt 40 ist im Querschnitt vorteilhafterweise halbkreisförmig ausgebildet und sein Innendurchmesser und der Abstand der Endabschnitte 44a, 44b sind insbesondere gleich groß wie der Außendurchmesser der Schlauchleitung 1.

Der Führungsabschnitt 40 weist zweckmäßigerweise an seiner Anlagefläche außerhalb des Anlagebereiches mindestens eine, vorzugsweise zwei Längsrippen 46 auf. Im Bereich dieser Längsrippen 46 erfolgt zweckmäßigerweise die stoffschlüssige Verbindung durch Ultraschall-Schweißung.

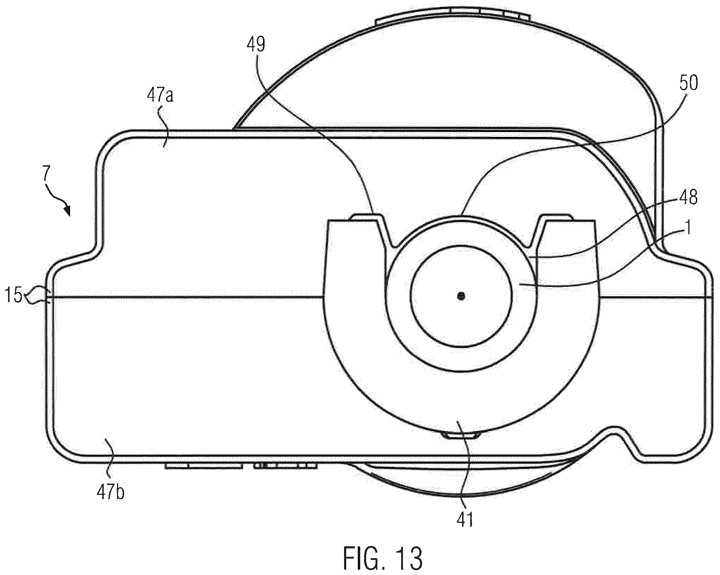

In Figur 13 ist eine Ansicht gemäß Pfeilrichtung XIII in Fig. 1a gezeigt, jedoch unter Verwendung des erfindungsgemäßen Fixierteils 8 gemäß den Figuren 10 bis 12. Die Kapselung 7 besteht aus den beiden Halbschalen 47a, 47b, die im Wesentlichen, insbesondere was ihre Ausbildung im Kapselinnenraum betrifft, der Ausbildung der Halbschalen 28, 28a gemäß Fig. 1a entspricht. Dies gilt ebenfalls für die Ausbildung der Stirnwand 16 in Figur 1a, durch die das Mantelrohr 16 verläuft.

Die ihr gegenüberliegende, andere Stirnwand 15, durch die die Schlauchleitung 1 austritt, weist in Abwandlung zu der Ausbildung gemäß Fig. 1a eine Öffnung 48 auf. Hierbei greift die untere Halbschale 47b mit ihrem Rand im Bereich der Öffnung 48 in die Aufnahmenut 42 des Halteflansches 41 ein. Die gegenüberliegende Halbschale 47a greift in die Aufnahmenut 42 im Bereich der Endabschnitte 44a, 44b ein. Eine zwischen den Endabschnitten 44a, 44b liegende Flanschöffnung 49 wird durch einen Stirnwandabschnitt 50 verschlossen, dessen Rand in seinem Verlauf an den Umfang der Schlauchleitung 1 angepasst ist. Die beiden Halbschalen 47a, 47b können zweckmäßigerweise durch eine Ultraschall-Schweißung verbunden sein.

### Bezugszeichenliste

- 1: Rohr- oder Schlauchleitung
- 1a: Rohr- oder Schlauchleitung
- 2: Heizleiter
- 2a: Zweiter Heizleiter
- 2b: Anschlussende
- 2c: Anschlussverbinder
- 2d: Wicklungsende
- 2e: Anschlussabschnitt
- 2f: Anschlussverbinder
- 2h: Verbinder
- 3: Heizleiter
- 4: Wicklungsende
- 4a: Elektrischer Verbinder
- 5: Fixierelement
- 6: Mantelrohr
- 6a: Endabschnitt
- 7: Kapselung
- 8: Fixierteil
- 9: Halbschalen
- 10: Ringbund
- 11: Führungsstutzen
- 11a: Führungstutzen
- 12: Ausnehmung
- 13: Rasthaken
- 14: Rastausnehmungen
- 15: Stirnwand
- 16: Stirnwand
- 18: Umfangswandung
- 19: Kapselraum
- 20: Öffnung von 16
- 21: Öffnungsrand
- 22: Wellentäler
- 23: Umfangsrippen
- 24: Öffnung von 15
- 26: Öffnungsrand
- 27: Innengehäuse
- 28: Halbschale
- 28a: Halbschale
- 29: Vorsprünge
- 30: Ausschnitte
- 31: Umlenkfortsatz
- 32: Tragkörper
- 33: Schrumpfschlauch
- 34: Körperenden
- 35: Clip-Vorrichtung
- 36: Erstes Clipteil
- 37: Verbindungsteg
- 38: Zweites Clipteil

- 40: Führungsabschnitt
- 41: Halteflansch
- 42: Aufnahmenut
- 43: Anlagefläche
- 44a,b: Endabschnitte
- 45: Einführungsschrägen
- 46: Längsrippen
- 47a,b: Halbschalen
- 48: Öffnung
- 49: Flanschöffnung
- 50: Stirnwandabschnitt

## Patentansprüche

1. Beheizte Medienleitung umfassend eine Rohr- oder Schlauchleitung (1) mit einem inneren Strömungskanal sowie mindestens einem am Umfang der Rohr- oder Schlauchleitung (1) verlaufenden elektrischen, insbesondere spiralförmig gewickelten Heizleiter (2), wobei der elektrische Heizleiter (2) über eine Teillänge (L1) der Rohr- oder Schlauchleitung (1) ausgehend von einem ersten Anschlussende (1a) der Rohr- oder Schlauchleitung (1) bis zu einem Wicklungsende (2d, 4) des Heizleiters (2) verläuft, so dass mindestens ein nicht mit dem Heizleiter (2) versehener Abschnitt mit einer Teillänge (L2) der Rohr- oder Schlauchleitung (1) vor einem zweiten Anschlussabschnitt (2e) ausgebildet ist, wobei ein Fixierteil (8) auf der Rohr- oder Schlauchleitung (1) unmittelbar gegen axiale Verschiebung auf der Rohr- oder Schlauchleitung (1) und in ihrer Umfangsrichtung gegen eine Verschiebung oder Verdrehung befestigt ist, so dass das Wicklungsende (2d, 4) mittelbar über das Fixierteil (8) auf der Rohr- oder Schlauchleitung (1) in axialer Richtung der Rohr- oder Schlauchleitung (1) und in ihrer Umfangsrichtung gegen eine Verschiebung oder Verdrehung fixiert ist und somit gegen eine Lageveränderung in Bezug auf die Rohr- oder Schlauchleitung (1) gesichert ist,
**dadurch gekennzeichnet, dass**
das Fixierteil (8) aus einem Kunststoff-Formteil besteht und einen im Querschnitt senkrecht zu seiner Längsachse (X-X) U-förmigen, sich in Längsrichtung erstreckenden Führungsabschnitt (40) aufweist, an dem an einem Ende des Führungsabschnitts (40) ein diesen einschließender Halteflansch (41) angeformt ist, der in seiner äußeren Umfangsfläche eine Aufnahmenut (42) aufweist und der U-förmige Führungsabschnitt (40) derart bemessen ist, dass die Rohr- oder Schlauchleitung (1) an seiner Innenfläche über einen Teilumfang des Führungsabschnitts (40) anliegt und das Fixierteil (8) und die Rohr- oder Schlauchleitung (1) im Anlagebereich (43) partiell stoffschlüssig verbunden sind.

2. Beheizte Medienleitung nach Anspruch 1,
**dadurch gekennzeichnet, dass** die Rohr- oder Schlauchleitung (1) mit einem Umfangswinkel von 180° an der Innenfläche des Führungsabschnitts (40) anliegt.

3. Beheizte Medienleitung nach Anspruch 1 oder 2,
**dadurch gekennzeichnet, dass** der Halteflansch (41) im Querschnitt U-förmig ist und in seiner Verlängerung seiner über einen Umfangswinkel von 180° verlaufenden Anlagefläche (43) jeweils endseitig parallel verlaufende Endabschnitte (44a, 44b) aufweist, deren Abstand mindestens dem Durchmesser der Rohr- oder Schlauchleitung (1) entspricht.

4. Beheizte Medienleitung nach einem der Ansprüche 1 bis 3,
**dadurch gekennzeichnet, dass** die stoffschlüssige Verbindung aus einer Ultraschall-Schweißverbindung besteht.

5. Beheizte Medienleitung nach einem der Ansprüche 1 bis 4,
**dadurch gekennzeichnet, dass** im Anlagebereich der Innenfläche des Führungsabschnitts (40) mindestens eine in Längsrichtung verlaufende Längsrippe (46) ausgebildet ist.

6. Beheizte Medienleitung nach einem der Ansprüche 1 bis 5,
**dadurch gekennzeichnet, dass** eine Halbschale (47a, 47b) einer Kapselung (7), insbesondere die Halbschale (47b) der Kapselung (7) in die Aufnahmenut (42) im Bereich der Endabschnitte (44a, 44b) eingreift und eine zwischen den Endabschnitten (44a, 44b) liegende Flanschöffnung (49) durch einen Stirnwandabschnitt (50) der Halbschale (47a) verschlossen wird, dessen Rand in seinem Verlauf dem Umfang der Rohr- oder Schlauchleitung (1) angepasst ist.

7. Beheizte Medienleitung nach Anspruch 6,
**dadurch gekennzeichnet, dass** eine Umfangswandung (18) der Kapselung (7) ein Innengehäuse (27) zur Aufnahme eines elektrischen Verbinders (4a) für die Verbindung der Enden von zwei auf der Rohr- oder Schlauchleitung (1) verlaufenden Heizleitern (2, 3) und gegebenenfalls von in die Kapselung (7) eingeführten elektrischen Versorgungsleitungen zum Anschluss an eine elektrische Spannungsquelle aufweist.

## Claims

1. Heated media line comprising a pipe or hose line (1) with an inner flow channel and at least one electrical, in particular spirally wound, heating conductor (2) running around the circumference of the pipe or hose line (1), wherein the electrical heating conductor (2) running over a partial length (L1) of the pipe or hose line (1) starting from a first connection end (1a) of the pipe or hose line (1) to a winding end (2d, 4) of the heating conductor (2), so that at least one section not provided with the heating conductor (2) is formed with a partial length (L2) of the pipe or hose line (1) upstream of a second connection section (2e), wherein a fixing part (8) being fastened on the pipe or hose line (1) directly against axial displacement on the pipe or hose line (1) and in its circumferential direction against displacement or twisting, so that the winding end (2d, 4) is fixed indirectly via the fixing part (8) on the pipe or hose line (1) in the axial direction of the pipe or hose line (1) and in its circumferential direction against displacement or twisting and is thus secured against a change in position with respect to the pipe or hose line (1),
**characterised in that**
the fixing part (8) consists of a moulded plastic part and has a guide section (40) which is U-shaped in cross-section perpendicular to its longitudinal axis (X-X) and extends in the longitudinal direction and on which a retaning flange (41) enclosing the guide section (40) is moulded at one end of the guide section (40), which has a receiving groove (42) in its outer circumferential surface, and the U-shaped guide section (40) is dimensioned in such a way that the pipe or hose line (1) bears against its inner surface over a partial circumference of the guide section (40), and the fixing part (8) and the pipe or hose line (1) are partially materially connected in the bearing area (43).

2. Heated media line according to claim 1,
**characterised in that** the pipe or hose line (1) bears against the inner surface of the guide section (40) with a circumferential angle of 180°.

3. Heated media line according to claim 1 or 2,
**characterised in that** the retaining flange (41) is U-shaped in cross-section and, in its extension of its bearing surface (43) extending over a circumferential angle of 180°, has respective end sections (44a, 44b) which extend parallel at the ends and whose spacing corresponds at least to the diameter of the pipe or hose line (1).

4. Heated media line according to any one of claims 1 to 3,
**characterised in that** the materially connection consists of an ultrasonic welded connection.

5. Heated media line according to any one of claims 1 to 4,
**characterised in that** at least one longitudinal rib (46) extending in the longitudinal direction is formed in the bearing area of the inner surface of the guide section (40).

6. Heated media line according to any one of claims 1 to 5,
**characterised in that** a half-shell (47a, 47b) of an encapsulation (7), in particular the half-shell (47b) of the encapsulation (7), is engaged in the receiving groove (42) of the encapsulation (7) in the region of the end sections (44a, 44b) and a flange opening (49) located between the end sections (44a, 44b) is closed by an end wall sections (50) of the half-shell (47a), the edge of which is adapted in its course to the circumference of the pipe or hose line (1).

7. Heated media line according to claim 6,
**characterised in that** a circumferential wall (18) of the encapsulation (7) has an inner housing (27) for receiving an electrical connector (4a) for connecting the ends of two heating conductors (2, 3) running on the pipe or hose line (1) and, if appropriate, electrical supply lines inserted into the encapsulation (7) for connection to an electrical voltage source.

## Revendications

1. Conduite de milieux chauffée comprenant une conduite ou tuyau (1) pourvue d'une lumière d'écoulement intérieure et d'au moins un conducteur chauffant électrique (2), notamment enroulé en spirale, qui s'étende sur la périphérie de la conduit rigide ou souple (1), le conducteur chauffant électrique (2) s'étendant sur une partie (L1) de la longueur de la conduite ou tuyau (1) à partir d'une première extrémité de raccordement (1a) de la conduite ou tuyau (1) jusqu'à une extrémité d'enroulement (2d, 4) du conducteur chauffant (2) de telle sorte qu'au moins une portion non pourvue du conducteur chauffant (2) soit formée avec une partie (L2) de la longueur de la conduite ou tuyau (1) avant une deuxième portion de raccordement (2e), une pièce de fixation (8) étant fixée sur la conduite ou tuyau (1) en s'opposant directement à un coulissement axial sur la conduite ou tuyau (1) et, dans sa direction périphérique, à un coulissement ou une rotation de sorte que l'extrémité d'enroulement (2d, 4) soit fixée indirectement par le biais de la pièce de fixation (8) sur la conduite ou tuyau (1) dans la direction axiale de la conduite ou tuyau (1) et, dans sa direction périphérique, en s'opposant à un coulissement ou une rotation et donc à un changement de position par rapport à la conduite ou tuyau (1),
**caractérisée en ce que**
la pièce de fixation (8) est une pièce moulée en matière synthétique et comporte une portion de guidage (40) qui est en forme de U perpendiculairement à son axe longitudinal (X-X) en coupe transversale, qui s'étend dans la direction longitudinale et sur laquelle, à une extrémité de la portion de guidage (40), est formée une bride de retenue (41) qui contient ladite portion de guidage, qui comporte une rainure de réception (42) dans sa surface périphérique extérieure, et la portion de guidage (40) en forme de U est dimensionnée de telle sorte que la conduite ou tuyau (1) soit en appui sur sa surface intérieure sur une partie de la périphérie de la portion de guidage (40), et la pièce de fixation (8) et la conduite ou tuyau (1) sont reliées partiellement par une liaison de matière dans la zone d'appui (43).

2. Conduite de milieux chauffée selon la revendication 1,
**caractérisée en ce que** la conduite ou tuyau (1) vient en appui sur la surface intérieure de la portion de guidage (40) en formant un angle périphérique de 180°.

3. Conduite de milieux chauffée selon la revendication 1 ou 2,
**caractérisée en ce que** la bride de retenue (41) a une forme de U en coupe transversale et comporte, dans le prolongement de sa surface d'appui (43) qui s'étend sur un angle périphérique de 180°, des portions d'extrémité (44a, 44b) qui s'étendent en parallèle à chaque extrémité et dont l'espacement correspond au moins au diamètre de la conduite ou tuyau (1).

4. Conduite de milieux chauffée selon l'une des revendications 1 à 3,
**caractérisée en ce que** la liaison de matière est une liaison soudée par ultrasons.

5. Conduite de milieux chauffée selon l'une des revendications 1 à 4,
**caractérisée en ce qu'**au moins une nervure longitudinale (46) qui s'étend dans la direction longitudinale est formée dans la zone d'appui de la surface intérieure de la portion de guidage (40).

6. Conduite de milieux chauffée selon l'une des revendications 1 à 5,
**caractérisée en ce qu'**une demi-coque (47a, 47b) d'une encapsulation (7), en particulier la demi-coque (47b) de l'encapsulation (7), s'engage dans la rainure de réception (42) au niveau des portions d'extrémité (44a, 44b) et une ouverture de bride (49), située entre les portions d'extrémité (44a, 44b), est fermée par une portion de paroi frontale (50) de la demi-coque (47a), dont le bord est adapté, dans son tracé, à la périphérie de la conduite ou tuyau (1).

7. Conduite de milieux chauffée selon la revendication 6,
**caractérisée en ce qu'**une paroi périphérique (18) de l'encapsulation (7) comporte un boîtier intérieur (27) destiné à recevoir un connecteur électrique (4a) destiné à relier les extrémités de deux conducteurs chauffants (2, 3) s'étendant sur la conduite ou tuyau (1) et comporte éventuellement des lignes d'alimentation électrique insérées dans l'encapsulation (7) et destinées à être raccordées à une source de tension électrique.
